# EUROPEAN PATENT SPECIFICATION

(11) **EP 0 687 617 B1**
(45) Date of publication and mention of the grant of the patent: **19.01.2000**
(21) Application number: 95108515.8
(22) Date of filing: 02.06.1995
(51) Int. Cl.: B62D 21/00, B62D 25/04

(54) **A junction for a vehicle chassis**
Verbindung für Fahrgestell
Jonction pour châssis de véhicule

(30) Priority: 17.06.1994 IT TO940502
(43) Date of publication of application: 20.12.1995
(73) Proprietor: FIAT AUTO S.p.A., 10135 Torino (IT)
(72) Inventor: Aragno, Franco, I-10093 Collegno (TO) (IT); Levorin, Mauro, I-10142 Torino (IT)
(74) Representative: Di Francesco, Gianni

(56) References cited:
- JP-A- 4 056 687
- JP-A- 4 081 371
- JP-A- 4 126 681
- JP-A- 5 208 688
- JP-A- 5 286 457
- JP-A- 61 169 376
- US-A- 3 132 891

## Description

The present invention falls within the field of vehicle chassises. More particularly, the invention relates to an automobile chassis junction for stiffening the connection between the side member and a substantially perpendicular body centre pillar attached thereto.

Many current motor vehicles have a steel or aluminium chassis in which the side member is formed by two complementary, coupled sections each having an open shaped cross section. The two complementary sections are welded together along longitudinal connection flanges extending along the whole length of the side member.

One of the major problems encountered with the above kind of structure is due to the weakness of the junction between the side member and the central body centre pillar which is fixed thereto.

The present invention relates to a junction comprising stiffening members, like those illustrated in JP-A-4 081371 and JP-A-4 056687, providing the strength that is required for the said junctions. Such a junction is disclosed in US-A-3132891, but his manufacturing is not as easy and quick as suitable.

It is an object of the present invention to provide a junction of easy and quick construction, wherein the welding points are particularly accessible.

In accordance with the invention as claimed, these objects are accomplished by the provision of a junction of a substantially horizontal, longitudinal side member and a substantially vertical body centre pillar suitable for a vehicle chassis as claimed in claim 1.

In order that the present invention may be well understood there will now be described a few preferred embodiments thereof, given by way of example, reference being made to the accompanying drawings, in which:
- FIG. 1: is an overall perspective view illustrating the junction of the present invention;
- FIG. 2: is an exploded perspective view of some of the parts composing the junction of FIG: 1;
- FIG. 3: is a perspective view of a further component which, in conjunction with the components of FIG. 2, forms the junction of FIG. 1; and
- FIG. 4: is a perspective view similar to FIG. 1 of an alternative embodiment of the junction of the present invention.

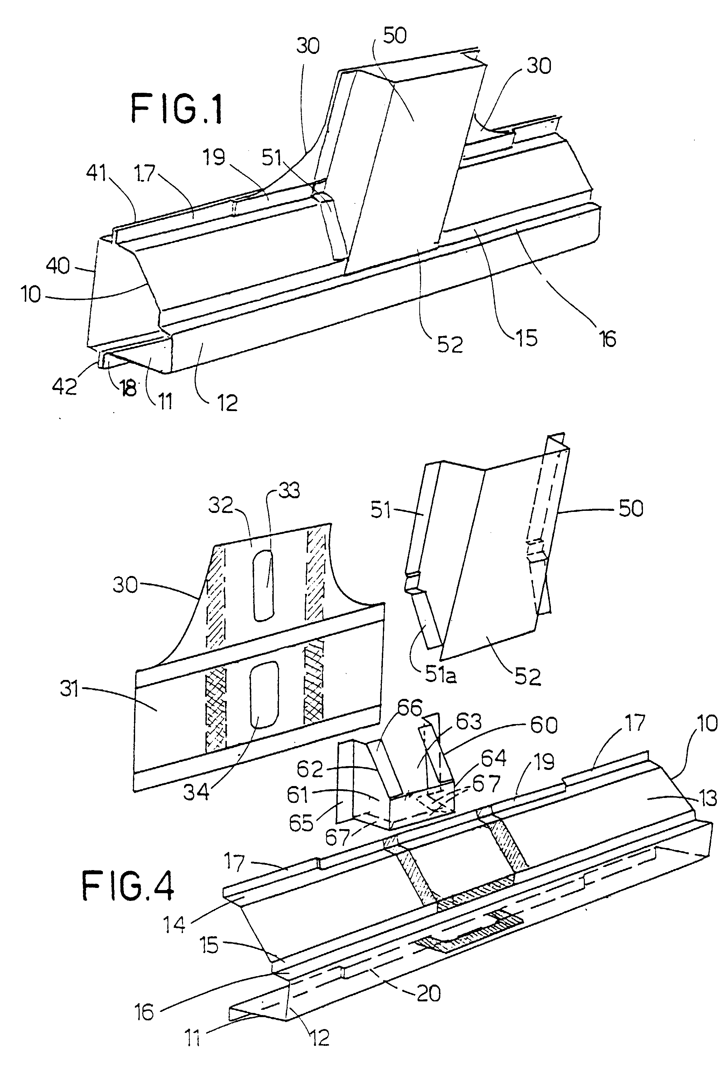

In summary, referring initially to FIG. 1, the present invention has the purpose of fixedly securing the side member with the body centre pillar 50. The side member is constituted by the union of an outer side member section 10 and a complementary inner side member section 40.

More particularly, connection between the inner and outer side member sections is accomplished in a substantially vertical plane along longitudinal vertical upper and lower flange connections designated at numerals 17, 18, 41, 42, respectively.

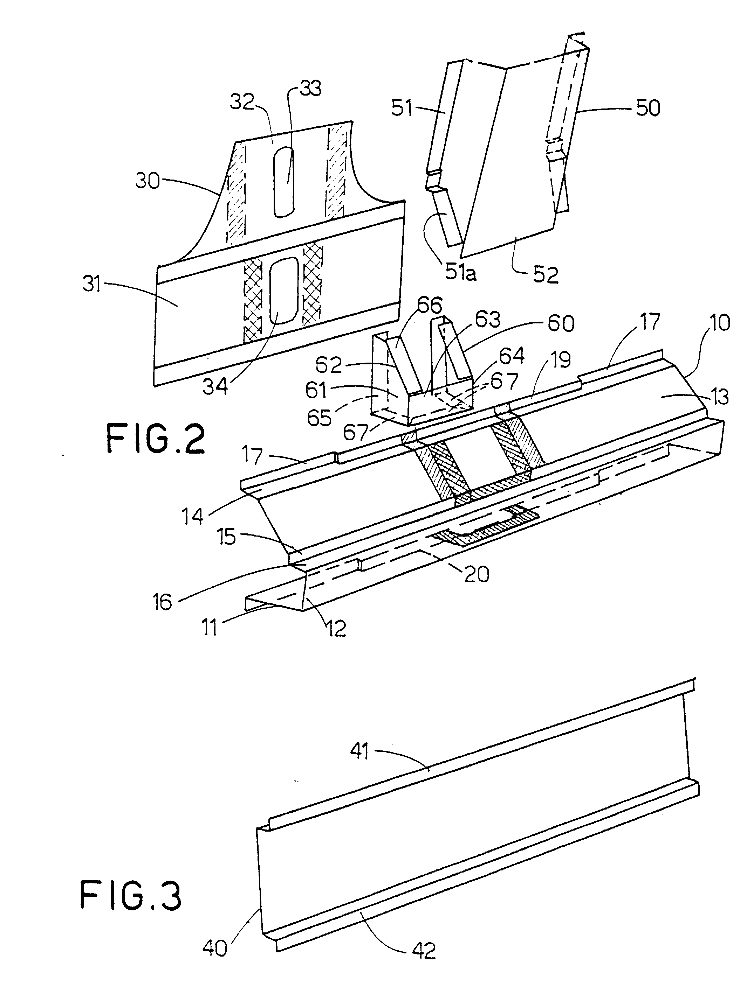

The outer side member section 10, also shown in the exploded view of FIG. 2, consists of a section having an open, outwardly directed convex cross section comprising a lower horizontal wall portion 11, a vertical wall portion 12, an oblique wall portion 13, and an upper horizontal wall portion 14. Oblique wall portion 13 connects to vertical wall portion 12 through two perpendicular wall portions 15, 16 forming a step re-entering in the open shape of the section in concave manner. In the centre, at the point where the body centre pillar is to be fixed, the connection flanges 17, 18 re-enter slightly towards the outside forming respective pockets 19, 20. Pockets 19, 20 extend lengthwise of a length corresponding to the length of a connecting plate or diaphragm 30, as will be apparent herein after.

Preferably, connection flanges 41, 42 of the inner side member section 40, are flat (FIG. 3).

Referring to FIG. 2, stiffening diaphragm 30 is formed by a plate of substantially upside-down T shape, the thickness of which corresponds to the deepness of pockets 19, 20 of body 10. Diaphragm 30 forms a longitudinally elongated lower portion 31 and an upwardly tapered upper portion 32. The height of lower portion 31 is approximately equal to that of side member sections 10 and 40. The top of upper portion 32 is as wide as body centre pillar 50.

Further, two vertically elongated openings are obtained in plate 30 providing a passage to the electrodes for carrying out successive welding operations: an upper opening 33 is obtained in upper portion 32, and a lower opening 34 is formed in the centre of lower portion 31.

Still referring to FIG. 2, the profile of a stiffening member 60 fits with the profile of outer side member section 10. Stiffening member 60 forms two stiffening facing side walls 61. Preferably, walls 61 are parallel in a transverse direction and are inclined like the walls of body centre pillar 50. Walls 61 are outwardly delimited by a an upper inclined edge 62 and a lower vertical edge 64. Edges 64 of facing walls 61 are joined by a longitudinal vertical wall 63. In addition, stiffening member 60 forms two longitudinal, vertical flaps 65, two oblique flaps 66, and three lower horizontal flaps 67.

As is apparent from the drawings, stiffening member 60 has a substantially C-shaped cross section. The open side of the section faces the inside to be successively closed by plate 30.

The body centre pillar 50 forms two side flaps 51. The shape of the lower part of flaps 51 fits with the upper, outer part of outer side member section 10.

Assembly of the various parts forming the junction of the present invention is as follows. Firstly, stiffening member 60 is fixed to outer side member section 10 by welding the upper oblique flaps 66 to the inner face of oblique wall portion 13. The three horizontal lower flaps 67 are welded to the upper face of lower horizontal wall portion 11 of body 10.

The unit formed by stiffening member 60 and outer side member section 10 is then fixed to the lower end of body centre pillar 50. The body centre pillar 50 is positioned on the outside of the outer side member section 10 above stiffening member 60 and the side flaps 51 of the body centre pillar are welded to the outer face of oblique wall portion 13, the upper horizontal wall portion 14, the pocket 19 of upper flange connection 17. The lower vertical flap 52 of the body centre pillar is welded to the vertical wall portion 15.

The so formed unit is soldered to plate 30 as follows. The upper portion 32 of the plate is welded vertically to the side flaps 51 of body centre pillar 50 symmetrically of opening 33. The lower portion 31 is welded to transverse vertical flaps 65 of stiffening member 60. The plate is soldered to the inner faces of pockets 19, 20 of outer side member section 10 by two horizontal weldings.

Finally, the inner side member section 40 is fixed by welding horizontally flange connections 41, 42 along flange connections 17, 18 of outer side member section 10 and the inner face of plate 30.

The complete junction is shown in FIG. 1.

As an alternative to the above described embodiment, a second embodiment of the present invention is shown in FIG. 4. This variant embodiment provides a stiffening member 60 having oblique flaps 66 disposed diverging instead of converging. Union of outer side member section 10, stiffening member 60 and body centre pillar 50 is accomplished in a single welding step by sandwiching the oblique wall portion 13 between flaps 66 of the stiffening member and the oblique portions of the flaps 51 of the body centre pillar. Similarly to what discussed in reference to the first example, the lower flaps 67 of the stiffening member are welded to the lower horizontal wall portion 11. Successively, plate 30 is welded to the stiffening member 30, the body centre pillar 50, and the pockets 19, 20 of outer side member section 10. In this second example, two apertures 34 are obtained in plate 30 providing access for welding the plate 30 to the stiffening member 60. The Unit formed by members 60, 50, 30, 10 is then welded to member 40. The final product is still the one shown in FIG. 1.

## Claims

1. A junction, of a substantially horizontal, longitudinal side member (10, 40) and a substantially vertical body centre pillar (50) suitable for a vehicle chassis, said side member consisting of two complementary joined sections: an outer section (10) having an outwardly convex, open shaped cross section, to which the body centre pillar is fixed from outside, and an inner section (40); said sections (10, 40) having respective longitudinal connection flanges (17, 18, 41, 42) adapted for welding said sections (10, 40) together in a substantially vertical plane; said junction further comprising a metal, stiffening member (60) *with box like shape and C-shaped cross section* for inserting in the hollow of the outer section (10) and welding thereto at the point where said body centre pillar (50) is welded; and a stiffening plate (30), substantially of upside-down T shape, adapted for welding on one side to the rigid unit formed by said outer section (10), said body centre pillar (50) and said stiffening member (60), and on the other side to said inner section (40); characterised in that the stiffening member (60) *forms two stiffening facing side walls (61) outwardly delimited by an upper inclined edge* (62) *and a lower vertical edge (64), said lower vertical edges of said facing walls (61) being joined by a longitudinal vertical wall (63); said stiffening member further forming two longitudinal, vertical inner flaps (65), two oblique upper flaps (66), and three lower horizontal flaps (67),* for welding to the upper (13) and lower (11) longitudinal wall portions of the side member section (10) and the plate (30), respectively; and further characterised in that the stiffening plate (30) has *at least one* lower opening (34) facing the stiffening member.

2. The junction of claim 1, wherein said flaps (66) of the stiffening member to be welded to the upper portion (13) of said outer section (10) are spaced apart of a distance corresponding to the distance between corresponding flaps (51a) for welding said body centre pillar (50) to said outer section (10), such that interposition of said wall portion (13) between said flaps (66) and (51a) and junction of said portions (13, 66, 51a) are allowed with a single welding operation.

## Patentansprüche

1. Verbindung zwischen einem im wesentlichen horizontalen länglichen Seitenträger (10, 40) und einer im wesentlichen vertikalen, in der Mitte des Körpers angeordneten Säule (50), geeignet für ein Fahrgestell, wobei der Seitenträger aus zwei komplementären verbundenen Abschnitten besteht: einem äußeren Abschnitt (10), der einen nach außen konvexen, offen geformten Querschnitt hat, an dem die in der Mitte des Körpers angeordnete Säule von außen befestigt ist, und einem inneren Abschnitt (40); die Abschnitte (10, 40) weisen jeweils längliche Verbindungsflansche (17, 18, 41, 42) auf, die zum Zusammenschweißen der Abschnitte (10, 40) in einer im wesentlichen vertikalen Ebene geeignet sind; die Verbindung umfaßt des weiteren ein metallenes Versteifungselement (60) von schachtelartiger Form und mit C-förmigem Querschnitt zum Einführen in die Vertiefung in dem äußeren Abschnitt (10) und zum Anschweißen an dem Punkt, an dem die in der Mitte des Körpers angeordnete Säule (50) angeschweißt ist; und eine Versteifungsplatte (30) von im wesentlichen umgekehrter T-Form, die zum Anschweißen auf einer Seite an die durch den äußeren Abschnitt (10), die in der Mitte des Körpers angeordnete Säule (50) und das Versteifungselement (60) gebildete starre Einheit und auf der anderen Seite an den inneren Abschnitt (40) geeignet ist;
dadurch gekennzeichnet,
daß das Versteifungselement (60) zwei sich einander gegenüberliegende Versteifungswände (61) bildet, die nach außen durch eine obere geneigte Kante (62) und eine untere vertikale Kante (64) begrenzt sind, wobei die unteren vertikalen Kanten der einander gegenüberliegenden Wände (61) durch eine längliche vertikale Wand (63) miteinander verbunden sind; das Versteifungselement bildet darüberhinaus zwei längliche, vertikale innere Klappen (65), zwei schräge obere Klappen (66) und drei untere horizontale Klappen (67) zum Anschweißen jeweils an die oberen (13) und unteren (11) länglichen Wandabschnitte des Seitenträgerabschnitts (10) und die Platte (30); des weiteren dadurch gekennzeichnet, daß die Versteifungsplatte (30) wenigstens eine untere Öffnung (34) aufweist, die dem Versteifungselement gegenüberliegt.

2. Verbindung nach Anspruch 1,
dadurch gekennzeichnet,
daß die Klappen (66) des Versteifungselements, die an den oberen Abschnitt (13) des äußeren Abschnitts (10) geschweißt werden sollen, mit einem Abstand voneinander angeordnet sind, der dem Abstand zwischen entsprechenden Klappen (51a) zum Schweißen der in der Mitte angeordneten Säule (50) an den äußeren Abschnitt (10) entspricht, so daß die Einschiebung des Wandabschnitts (13) zwischen die Klappen (66) und (51a) und die Verbindung der Abschnitte (13, 66, 51a) in einem einzigen Schweißvorgang möglich ist.

## Revendications

1. Jonction d'un élément latéral (10, 40) longitudinal sensiblement horizontal et d'une colonne centrale de carrosserie (50) sensiblement verticale appropriée pour un châssis de véhicule, ledit élément latéral étant constitué de deux sections raccordées complémentaires : une section externe (10) présentant une section transversale ouverte et convexe vers l'extérieur à laquelle la colonne centrale de la carrosserie est fixée à partir de l'extérieur et une section interne (40) ; lesdites sections (10, 40) comportant des rebords de raccordement longitudinaux (17, 18, 41, 42) respectifs conçus pour souder lesdites sections (10, 40) ensemble dans un plan sensiblement vertical ; ladite jonction comprenant en outre un élément de raidissement métallique (60) ayant une forme de type boîte et une section transversale en forme de C pour une insertion dans le creux de la section externe (10) et un soudage à celle-ci au point où ladite colonne centrale de carrosserie (50) est soudée ; et une plaque de raidissement (30) sensiblement en forme de T renversé, conçue pour un soudage, sur un côté à l'unité rigide formée par ladite section externe (10), ladite colonne centrale de carrosserie (50) et ledit élément de raidissement (60), et sur l'autre côté à ladite section interne (40) ; caractérisée en ce que l'élément de raidissement (60) forme deux parois latérales de raidissement (61) en regard l'une de l'autre et délimitées vers l'extérieur par un bord supérieur incliné (62) et un bord inférieur vertical (64), lesdits bords inférieurs verticaux desdites parois (61) en regard étant raccordés par une paroi verticale longitudinale (63) ; ledit élément de raidissement (60) formant en outre deux rabats internes verticaux longitudinaux (65), deux rabats supérieurs obliques (66) et trois rabats horizontaux inférieurs (67) pour un soudage aux parties de paroi longitudinales supérieure (13) et inférieure (11) de la section de l'élément latéral (10) et à la plaque (30), respectivement ; et caractérisée en outre en ce que la plaque de raidissement (30) comporte au moins une ouverture inférieure (34) en regard de l'élément de raidissement.

2. Jonction selon la revendication 1, dans laquelle lesdits rabats (66) de l'élément de raidissement qui doivent être soudés à la partie supérieure (13) de ladite section extérieure (10), sont espacés d'une distance correspondant à la distance entre les rabats (51a) correspondants pour un soudage de ladite colonne centrale de carrosserie (50) à ladite section externe (10), d'une manière telle que l'interposition de ladite partie de paroi (13) entre lesdits rabats (66) et (51a) et la jonction desdites parties (13, 66, 51a) sont réalisables par une seule opération de soudage.
